# EUROPÄISCHE PATENTSCHRIFT

(11) **EP 1 097 018 B1**
(45) Veröffentlichungstag und Bekanntmachung des Hinweises auf die Patenterteilung: **12.12.2001**
(21) Anmeldenummer: 99936565.3
(22) Anmeldetag: 19.07.1999
(51) Int. Cl.: B23F 1/00

(54) **VERFAHREN UND VORRICHTUNG ZUM ERZEUGEN VON HINTERLEGUNGEN AN ZAHNFLANKEN VON INNEN- ODER AUSSENVERZAHNTEN WERKRÄDERN**
METHOD AND DEVICE FOR CREATING UNDERCUTS ON TOOTH FLANKS OF INTERNALLY OR EXTERNALLY GEARED GEAR BLANKS
PROCEDE ET DISPOSITIF POUR PRODUIRE DES CONTRE-DEPOUILLES SUR DES PROFILS DE DENTS DE ROUES A DENTURE INTERIEURE OU EXTERIEURE

(30) Priorität: 20.07.1998 DE 19832487; 12.11.1998 DE 19852201
(43) Veröffentlichungstag der Anmeldung: 09.05.2001
(60) Teilanmeldung: 01102935.2
(73) Patentinhaber: WERA WERK HERMANN WERNER GmbH & Co. KG, D-42349 Wuppertal (DE)
(72) Erfinder: HEYM, Hans, Udo, D-42327 Wuppertal (DE)
(74) Vertreter: Grundmann, Dirk, Dr.
(86) Internationale Anmeldenummer: EP9905122
(87) Internationale Veröffentlichungsnummer: WO0005023

(56) Entgegenhaltungen:
- DE-C- 4 117 365
- DE-C- 4 200 418
- DE-C- 4 303 897
- US-A- 2 936 678

## Beschreibung

Die Erfindung betrifft ein Verfahren und eine Vorrichtung zum Erzeugen von Hinterlegungen oder dergleichen an Zahnflanken von innen- oder außenverzahnten Werkrädern durch spanende Bearbeitung mittels eines Schneidkantenwerkzeuges, welches um eine zur Werkradachse parallele Werkzeugachse dreht, mit einer Schneidkantenform, die der Hinterlegungsform entspricht.

Ein Verfahren und eine Vorrichtung der in Rede stehenden Art sind bekannt aus der DE 42 00 418 C1, wobei das Schneidkantenwerkzeug als drehantreibbares Einzahnwerkzeug ausgebildet ist. Dessen Schneidkante bewegt sich relativ zur Werkstückverzahnung für die Bearbeitung einer Innenverzahnung auf einer Hypozykloide und für die Bearbeitung an einer Außenverzahnung auf einer Epizykloide. Dabei erfolgt der Schneideneingriff in die Verzahnung jeweils im Spitzenbereich der Zykloide stoßend. Die Standzeit eines solchen Einzahnwerkzeuges ist naturgemäß gering, da der Spanabtrag mittels eines einzigen Zahnes erfolgt. Die Folge davon ist ein häufigerer Werkzeugwechsel verbunden mit der daraus resultierenden Stillstandzeit der entsprechenden Vorrichtung.

Der Erfindung liegt die Aufgabe zugrunde, ein gattungsgemäßes Verfahren nebst Vorrichtung anzugeben, welche sich durch eine hohe Wirtschaftlichkeit auszeichnen.

Gelöst wird die Erfindungsaufgabe durch die in den Ansprüchen 1 und 2 angegebene Erfindung, wobei sich Anspruch 1 auf das Verfahren und Anspruch 2 auf die Vorrichtung bezieht.

Die Unteransprüche stellen vorteilhafte Weiterbildungen der Erfindung dar.

Zufolge der erfindungsgemäßen Ausgestaltung ist ein besonders wirtschaftlich arbeitendes Verfahren und eine Vorrichtung zum Erzeugen von Hinterlegungen oder dergleichen an Zahnflanken von innen- oder außenverzahnten Werkrädern angegeben. Das Werkzeug ist nun im Gegensatz zu einem Einzahnwerkzeug zahnradförmig gestaltet. Die Zähne dieses Werkzeug-Zahnrades bilden nun die Schneidkanten aus, wobei die radial äußersten Schneiden (mit den nachstehend noch erläuterten ggf. weiteren Möglichkeiten) die Schneidarbeit leisten. Aufgrund einer Vielzahl von Zähnen, von denen jede einzelne mit Schneidkanten versehen ist, ergibt sich eine hohe Anzahl von Schneidkanten, die beim Erzeugen von Hinterlegungen zur Wirkung gelangen. Das bedeutet, daß die Beanspruchung der Schneidkanten reduziert ist verbunden mit einer besonders hohen Standzeit des Werkzeuges.
Ein Werkzeugwechsel ist dadurch erheblich reduziert, was sich in einer hohen Wirtschaftlichkeit der Vorrichtung bzw. einer entsprechenden Maschine auszeichnet.
Da ferner mehrere Zähne nacheinander zum Einsatz gelangen, ist auch der Kraftangriff an dem Werkrad geringer, so daß die Werkstückaufnahme ebenfalls entlastet wird. Überdies können die Achsen des Werkrades und des zahnradartigen Werkzeuges parallel zueinander verlaufen. Der beim Erzeugen der Hinterlegungen anfallende Spanabtrag erfolgt durch Flankenanpressung der der Hinterlegungsform angepaßten, Schneidkanten ausbildenden Werkzeugzahnflanke gegen die Werkradzahnflanke in Radialrichtung. Es wird also die radiale Bewegungskomponente der sich abwälzenden Zahnflanken genutzt zur Spanabtragung, und zwar durch die Schneidkanten an den Werkzeugzahnflanken. Je größer die Flankenanpressung wird, desto größer ist auch der Spanabtrag. Die den Schneidkanten benachbarten Spannuten können zwickelförmig oder auch rechteckig gestaltet sein. Eine Möglichkeit zur Erzeugung der Hinterlegungsform besteht darin, daß das Werkzeug das Werkstück in einer festen Axialstellung bearbeitet. Eine Alternative ist darin zu sehen, daß das Werkzeug das Werkstück in einer festen Radialstellung bearbeitet und der Vorschub in Umfangsrichtung erfolgt. Eine Kombination ist dabei darin zu sehen, daß der Vorschub insbesondere auch in Radialrichtung während des Erzeugens der Hinterlegungsform geschieht. Da die Schneidkanten an den Zahnflanken des Werkzeuges sitzen und jede Flanke eine Vielzahl von Schneidkanten ausbildet, können zur Erzeugung einer bestimmten Flankenpressung sowohl das Werkstück als auch das Werkzeug von elektrischen Einzelantrieben angetrieben werden.
Es ist möglich, den dem Werkzeug zugeordneten Einzelantrieb als einstellbare Bremsvorrichtung zu gestalten. Grundsätzlich ist während des Bearbeitens, also des Spanabtrages, realisiert, daß das Werkzeug mit einem gleichbleibenden Drehmoment auf das Werkstück wirkt. Ferner ist erfindungsgemäß vorgesehen, daß die maximale Zahnstärke des Werkzeuges geringer ist als der Flankenabstand zweier benachbarter Zähne des Werkrades. Die maximale Zahnstärke des Werkzeuges schließt dabei die Flankenvorsprünge mit ein, so daß das Werkzeug behinderungsfrei in Flankenanpressung zum Werkrad treten kann. Ein weiterer Vorteil besteht erfindungsgemäß darin, daß die Schneidkanten in Drehrichtung aufeinanderfolgender Flanken in Radialrichtung versetzt zueinander liegen. Aufgrund dieses Versatzes erhält man bei der spanabtragenden Bearbeitung eine gleichmäßige Oberfläche an den Hinterlegungen der Zahnflanken des Werkrades. Das Werkzeug besitzt in vorteilhafter Weise erste und zweite Schneidkanten. Diese sind so ausgebildet und in Umfangsrichtung so angeordnet, daß die ersten Schneidkanten nur in einer Drehrichtung in Schneideingriff treten und die zweiten Schneidkanten nur in der anderen, entgegengesetzten Drehrichtung in Schneideingriff treten können. Durch diese Maßnahme wird jede der beiden Zahnflanken eines Zahnes mit den jeweils betreffenden Schneidkanten geschnitten. Somit ist es möglich, daß sowohl beim Links- als auch beim Rechtslauf die Schneidkanten mit dem gleichen Spanwinkel arbeiten können, der in einem weiten Bereich frei wählbar ist. Dabei sind die ersten und zweiten Schneidkanten jeweils benachbarten Zähnen des Werkzeuges zugeordnet. Im Detail sieht dies so aus, daß Zähne, die entweder nur erste und Zähne die entweder nur zweite Schneidkanten aufweisen, sich in Umfangsrichtung abwechseln. Ferner sitzen die ersten und zweiten Schneidkanten jeweils in Umfangsrichtung gleichverteilt am Werkzeug. Um zu gewährleisten, daß die ersten Schneidkanten immer in schneidenden Eingriff zu den Zahnflanken treten und die zweiten Schneidkanten frei durch die Zahnlücken durchtauchen, ist vorgesehen, daß der Winkelabstand zwischen jeweils einer ersten Schneidkante und einer zweiten Schneidkante anders ist als der in Umfangsrichtung darauffolgende Winkelabstand zwischen einer zweiten und einer ersten Schnittkante. Während einer Bearbeitung bewegen sich die Schneidkanten einer Zahnflanke auf voneinander verschiedenen, innerhalb einer Einhüllenden liegenden Zykloidenästen. Eine Weiterbildung der Erfindung sieht vor, daß der Abstand von Werkstückachse und Werkzeugachse während der spanenden Bearbeitung durch eine elektronische Steuerung geringfügig verlagert werden kann. Gleichzeitig damit ist eine Beeinflussung der Phasenlage von Werkzeugachse und Werkstückachse vorgesehen. Zufolge dieser Beeinflussungsmöglichkeit kann der auf einer Zykloide verlaufende Flugkreis jeder Schneidkante so während der Bearbeitung verlagert werden, daß die der Schnittkantenbewegung folgende Hüllkurve eine Evolvente oder nahezu eine Evolvente ist und dabei die entsprechend geformte Hinterlegung ausfräst. Ferner ist vorgesehen, daß das Zähneverhältnis zwischen Werkrad und Werkzeug etwa bei 3 : 1 liegt, wobei das Verhältnis genau 3 : 1 ausgeschlossen ist, da zur Bearbeitung offene Zykloiden notwendig sind. Schließlich ist noch hervorzuheben, daß das Werkzeug mit einem Ergänzungswerkzeug versehen ist, so daß das Zahnverhältnis genau 3 : 1 ist. Mit diesem Ergänzungswerkzeug lassen sich dann in gleichmäßiger Winkelverteilung am Werkstück Gleitsteinnuten oder Rastnuten einfräsen. Dann läuft die Zahnkante auf einer geschlossenen Zykloide.

Bei Ausbildung des Schneidwerkzeuges in Form eines Zahnrades mit von den Zähnen ausgebildeten Schneidkanten erweist es sich insbesondere zur Durchführung des Verfahrens oder eingesetzt in einer Vorrichtung von Vorteil, daß die Schneidkanten von in Drehrichtung hintereinanderliegenden Zähnen zumindest im Bereich eines Umfangabschnittes einen variierenden Radialabstand aufweisen. So kommen kontinuierlich die Schneidkanten in Eingriff zu den Zahnflanken des Werkrades unter Erzielung der entsprechenden Hinterlegungsform. Ein Zahnrad kann ein oder mehrere in Drehrichtung hintereinanderliegende Umfangsabschnitt mit entsprechend gestalteten hinterliegenden Zähne ausbilden. Dabei ist erfindungsgemäß vorgesehen, daß der Radialabstand der Schneidkanten der im Umfangsabschnitt hintereinanderliegenden Zähne ab- bzw. zunimmt. Dies trägt dazu bei, die Standzeit eines Schneidrades zu erhöhen. Ebenfalls schlägt sich dies in einer geringeren, auf die Zähne wirkenden Belastung nieder. Erfindungsgemäß ist es möglich, eine Vielzahl von hintereinanderliegenden Umfangsabschnitten mit in gleicher Sequenz angeordneten und gestalteten Zähnen vorzusehen. Beispielsweise kann das gezahnte Schneidrad drei oder vier hintereinanderliegende Umfangsabschnitte besitzen. Ein weiteres vorteilhaftes Merkmal ist darin zu sehen, daß die Schneidkanten der in einem Umfangsabschnitt hintereinanderliegenden, in eine gedachte Überdeckungslage gebrachten Zähne auf einer gemeinsamen Hüllkurve liegen, deren Kontur ein Abschnitt der Bewegungsevolvente ist. Die Folge davon ist, daß die Schneidkanten der in einem Umfangsabschnitt aufeinanderfolgenden Zähne die Zahnflanken des Werkrades auf derselben Kurve überfliegen, und zwar wenn ohne Vorschub gearbeitet wird. Auch ist vorgesehen, daß die Schneidkanten der in einem Umfangsabschnitt aufeinanderfolgenden Zähne radial versetzt zueinanderliegende Abschnitte der Zähne des Werkrades bearbeiten, so daß sich hieraus ein günstiges Schneidverhalten ergibt. Ein weiteres vorteilhaftes Merkmal ist erfindungsgemäß darin zu sehen, daß die radial äußeren Schneidkanten von Nuten gebildet sind und die radial inneren Schneidkanten die Stirnkanten der Zähne sind. Das mit diesem Schneidrad durchgeführte Verfahren zeichnet sich dadurch aus, daß die Schneidkanten in Drehrichtung aufeinanderfolgender Zähne an verschiedenen Radialpositionen der Zähne des Werkrades angreifen, wobei sich die Materialabtragungen durch die Einzelschneidkanten zur Hinterlegungsform ergänzen.

Nachstehend wird ein Ausführungsbeispiel einer Vorrichtung gemäß der Erfindung zur Durchführung des erfindungsgemäßen Verfahrens erläutert. Es zeigen:
- Fig. 1: in schematischer Darstellung die Vorrichtung mit in Schnittdarstellung veranschaulichtem, innenverzahntem Werkrad mit zugeordnetem zahnradförmigen Werkzeug,
- Fig. 2: den Schnitt nach der Linie II-II in Figur 1,
- Fig. 3: in vergrößertem Maßstab den Schnitt nach der Linie III-III in Figur 2,
- Fig. 4: ausschnittsweise einen Querschnitt durch die ineinandergreifenden Zähne von Werkrad und Werkzeug, und zwar auf Höhe der maximalen Zahnstärke des Werkzeugs,
- Fig. 5: in stark vergrößerter Darstellung zwei aufeinanderfolgende Zähne des Werkzeuges,
- Fig. 6: in perspektivischer Darstellung einen Randausschnitt des mit Hinterlegungen versehenen Werkrades,
- Fig. 7: in perspektivischer Darstellung einen Randausschnitt des Werkzeuges,
- Fig. 8: eine Darstellung wie Figur 5, jedoch bei im Querschnitt rechteckförmigen Spannuten,
- Fig. 9: in stark vergrößerter Darstellung zwei aufeinanderfolgende Zähne des Werkstückes mit in die Zahnlücke eintauchenden Zykloidenästen, auf welchen sich die Schneidkanten einer Zahnflanke bewegen mit an die Zykloidenäste angelegter Einhüllenden, welche die Hinterlegungsform bestimmt,
- Fig. 10: eine Folgedarstellung der Fig. 9, wobei abweichend gegenüber dieser aufgrund eines in Umfangsrichtung erfolgenden Vorschubes sich eine geänderte Hinterlegungsform ergibt,
- Fig. 11: eine der Fig. 9 entsprechende Darstellung, jedoch bei in Radialrichtung verstellter Einhüllenden, so daß auch hier wieder ein geänderter Verlauf der Hinterlegung realisiert ist,
- Fig. 12: eine Ansicht eines abgewandelt gestalteten, zahnradartigen Schneidwerkzeuges mit einer Mehrzahl von hintereinanderliegenden Umfangsabschnitten mit in gleicher Sequenz angeordneten und gestalteten Zähnen,
- Fig. 13: in Abwicklungsdarstellung die zu einem Umfangsabschnitt gehörenden Zähne und
- Fig. 14: die in eine Überdeckungslage gebrachten, zu einem Umfangsabschnitt gehörenden Zähne, wobei die Zähne auf einer gemeinsamen Hüllkurve liegen.

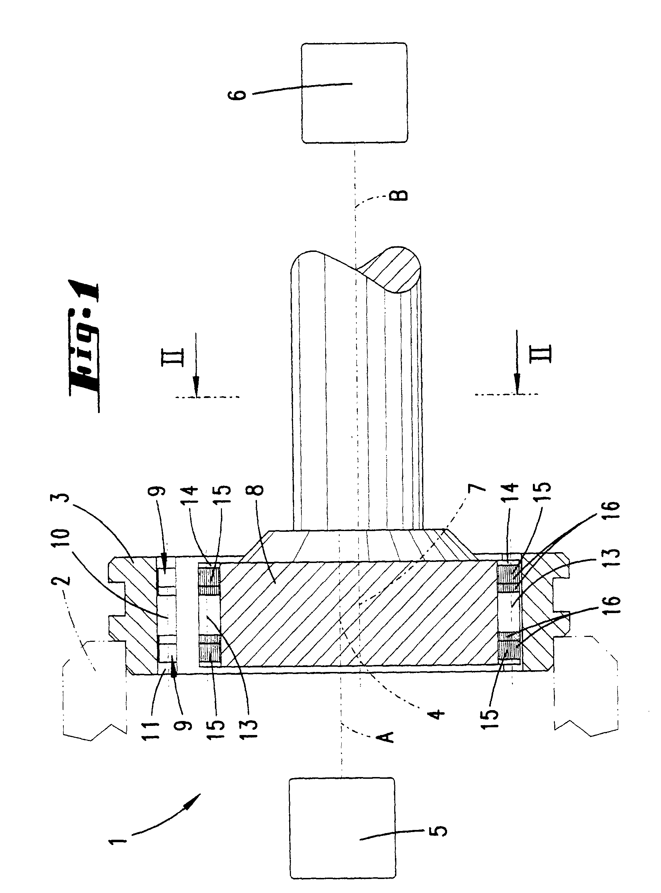

Bezüglich der in Figur 1 schematisch veranschaulichten Vorrichtung 1 handelt es sich um den relevanten Teil einer Werkzeugmaschine. Diese besitzt ein strichpunktiert dargestelltes Außenspannfutter 2, mittels welchem ein innenverzahntes Werkrad 3 einspannbar ist derart, daß die Achse 4 des Werkrades 3 mit der Werkstückspindelachse A fluchtet, welche in bekannter Weise das Außenspannfutter 2 trägt. Letzteres beinhaltet beim Ausführungsbeispiel vier in gleicher Umfangsverteilung angeordnete Spannbacken, die das Werkrad 3 festspannen und in der zentrierten Stellung halten. Die mit der Werkradachse 4 fluchtende Spindelachse A führt zu einem elektrischen, schematisch angedeuteten Einzelantrieb 5.

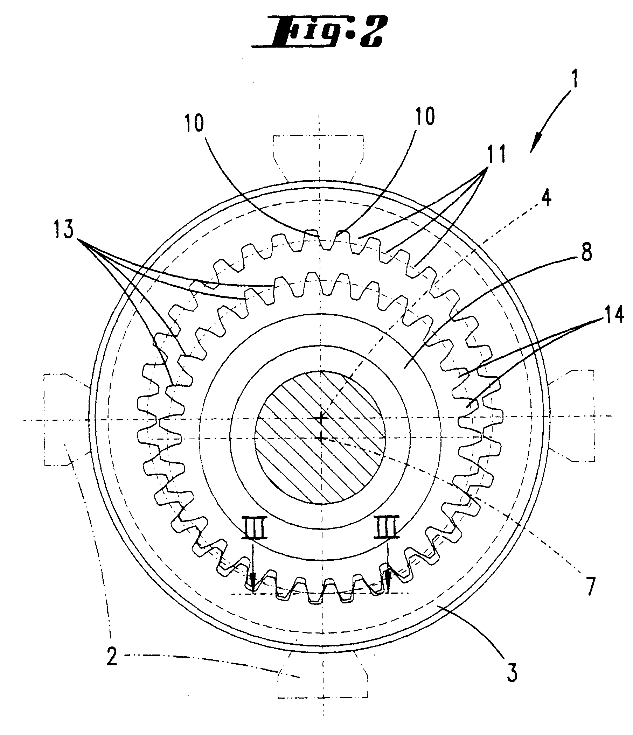

Mit dem Buchstaben B ist die mit einem elektrischen Einzelantrieb 6 drehverbundene Werkzeugspindelachse bezeichnet. Sie fluchtet mit der Achse 7 eines außenverzahnten zahnradförmigen Werkzeuges 8. Aus Figur 1 und 2 geht hervor, daß die Achsen 4,7 des Werkrades 3 und Werkzeuges 8 parallel zueinander verlaufen.

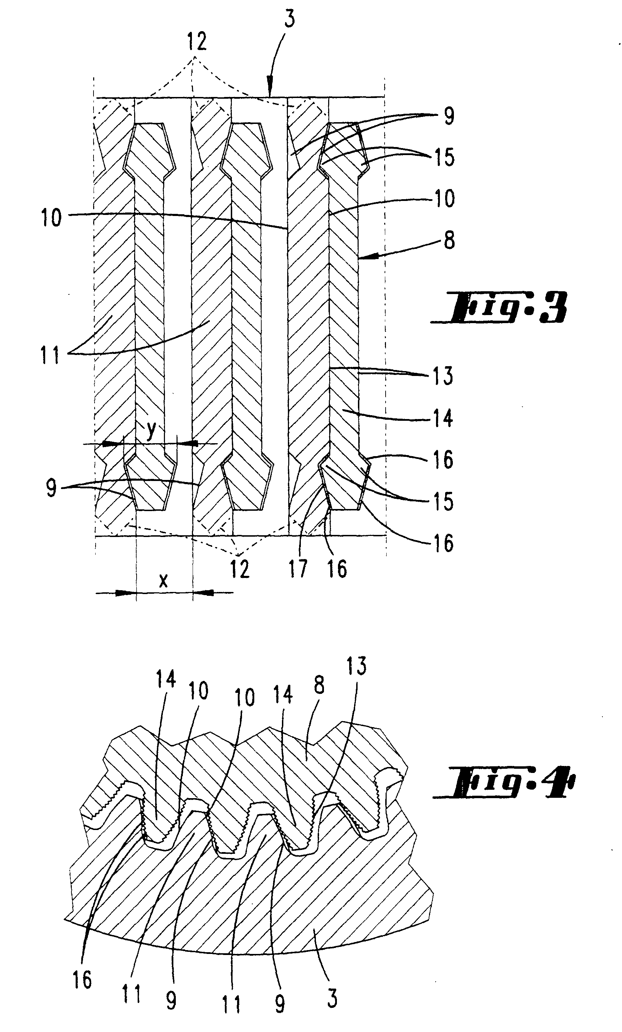

Das Werkzeug-Zahnrad 8 dient dazu, Hinterlegungen 9 an den Zahnflanken 10 der Zähne 11 des innenverzahnten Werkrades 3 zu erzeugen. In Richtung der Zahnkopffläche gesehen, ist jede Hinterlegung 9 als stumpfwinklige Einbuchtung gestaltet derart, daß der eine Winkelschenkel 9' einem Mehrfachen der Länge des anderen Winkelschenkels 9'' entspricht. Demgemäß haben auch die Winkelschenkel 9',9'' einen unterschiedlich großen Winkel zur Längsrichtung jedes Zahnes 11. Beim Ausführungsbeispiel sind an jedem Zahn 11 an jeder Zahnflanke 10 zwei hintereinanderliegende Hinterlegungen 9 vorgesehen. In Figur 3 ist strichpunktiert veranschaulicht, daß den Hinterlegungen 9 an jedem Zahn 11 eine dachförmige Abflachung 12 vorgeordnet sein kann, welche Abdachungen in einem gesonderten Arbeitsprozeß erzeugt werden.

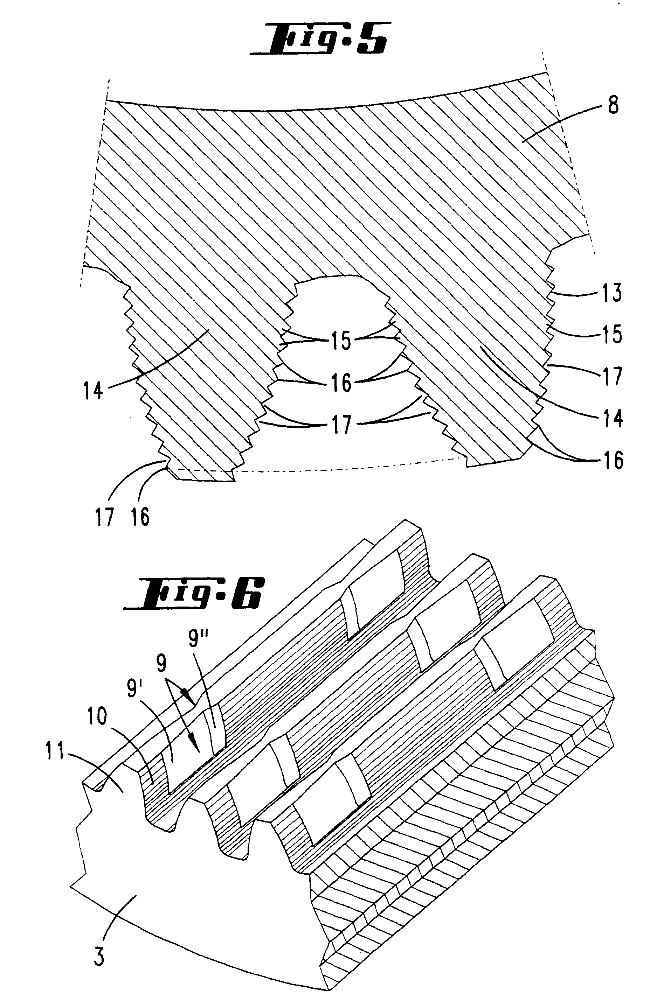

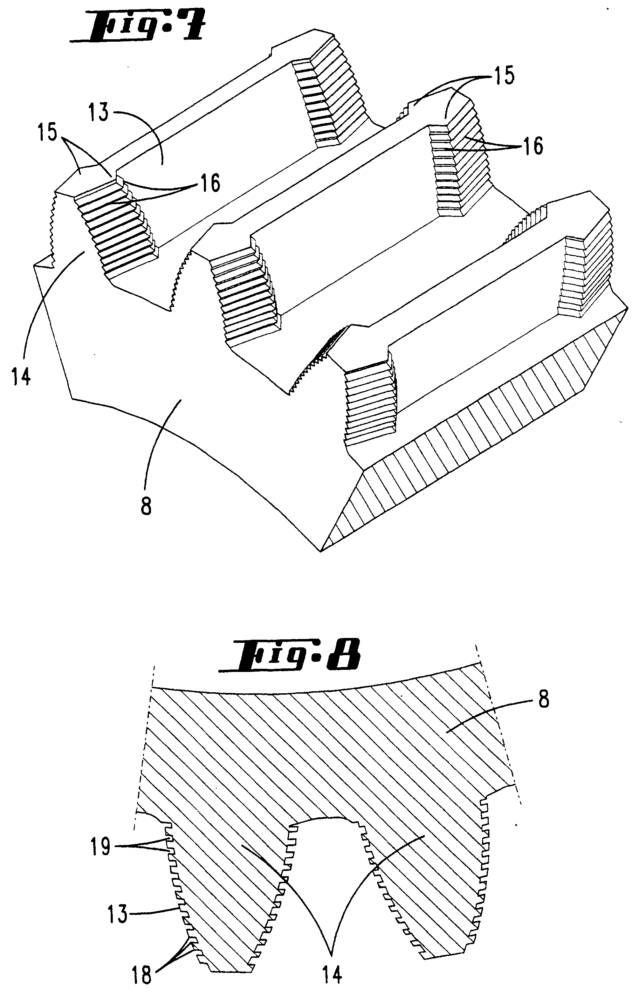

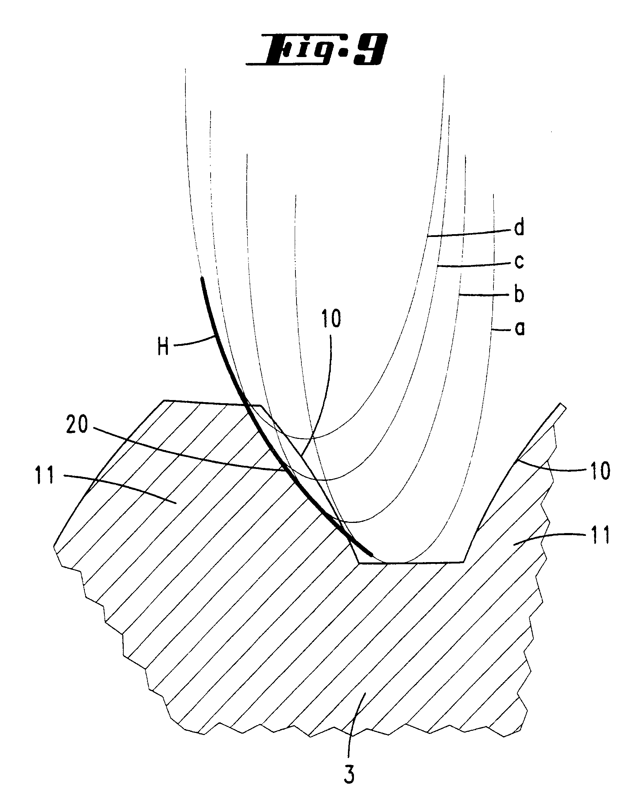

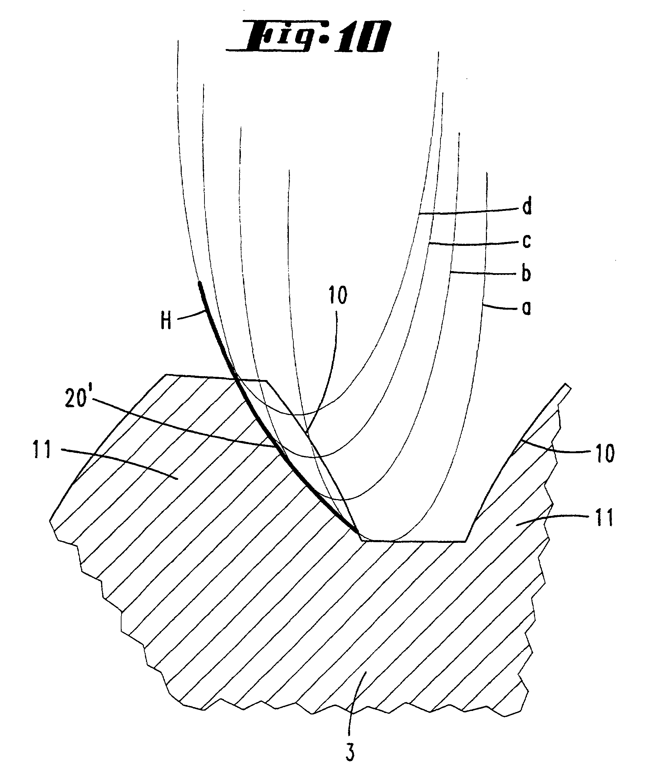

Zur Erzeugung der vorerwähnten Hinterlegungen 9 besitzen die Zahnflanken 13 der Zähne 14 des Werkzeug-Zahnrades 8 der Hinterlegungsquerschnittsform formangepaßte Flankenvorsprünge 15. Diese weisen parallel zur Zahnkopffläche ausgerichtete Schneidkanten 16 auf, welche an den stumpfwinklig zueinanderstehenden Winkelschenkeln 15', 15'' der Flankenvorsprünge 15 vorgesehen sind. Gemäß Figur 3 bis 7 sind die Schneidkanten 16 durch dreieckförmig Spannuten 17 gebildet. Figur 5 veranschaulicht, daß die Schneidkanten 16 aufeinanderfolgender Flanken versetzt zueinanderliegen, was es erlaubt, möglichst gleichmäßige Oberflächen der Hinterlegungen zu fertigen, wobei die Schneidarbeit von den radial äußersten Schneidkanten 16 übernommen wird, ggf. aber auch noch - allein oder zusätzlich - von einer oder weiteren mehr radial innen angeordneten Schneidkanten.

Grundsätzlich ist festzuhalten, daß das Werkzeug-Zahnrad 8 das Werkrad 3 in einer festen Axialstellung bearbeitet. Während des Abwälzens des Werkstück-Zahnrades 8 verlagert sich das Werkrad 3 in Axialrichtung also nicht. Dies trifft auch auf das Werkzeug-Zahnrad 8 zu.

Während der elektrische Einzelantrieb 6 dem Werkzeug-Zahnrad 8 eine Umdrehung vermittelt, ist der Einzelantrieb 5, welcher auf das Werkrad 3 einwirkt, als einstellbare Bremsvorrichtung gestaltet. Hierdurch wird erreicht, daß beim Abwälzen des Werkzeug-Zahnrades 8 am Werkrad 3 sich die betreffenden Zahnflanken 10 und 13 unter Flankenanpressung aneinander abwälzen, wobei durch die in radialer Richtung verlaufende Bewegungskomponente der sich abwälzenden, Schneidkanten 16 aufweisenden Zahnflanken 13 zur Spanabtragung genutzt werden. Auf diese Weise werden kontinuierlich an den einen Zahnflanken 10 der Zähne des Werkrades 3 die den Flankenvorsprüngen 15 angepaßten Hinterlegungen 9 erzeugt. Stets wirkt das Werkzeug-Zahnrad 8 dabei mit einem gleichbleibenden Drehmoment auf das Werkstück, also das Werkrad 3 ein.

Sollen die anderen Zahnflanken des Werkrades 3. die Hinterlegungen 9 erhalten, so hat eine Drehrichtungsumkehr bezüglich des Einzelantriebes 6 zu erfolgen.

Vor Einschalten des Einzelantriebes 6 ist der Zahneingriff zwischen den Rädern 3 und 8 herbeizuführen. Dies kann entweder ausschließlich durch axiale Zustellbewegung oder auch durch kombiniertes radiales und axiales Zustellen erfolgen. Damit dieses störungsfrei durchführbar ist, ist die maximale Zahnstärke y des Werkzeuges 8 geringer als der Flankenabstand x zweier benachbarter Zähne des Werkrades 3, vergleiche Figur 3.

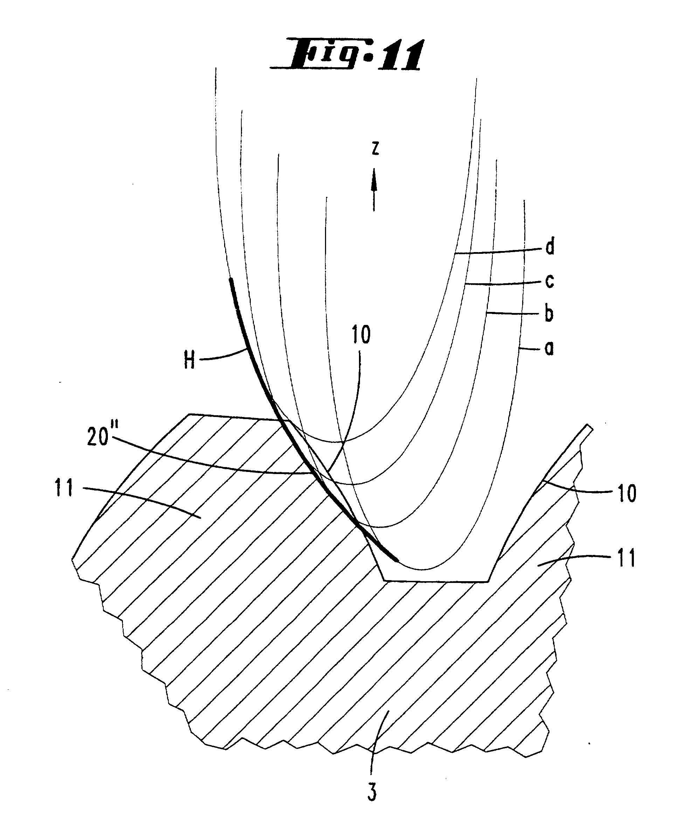

Die Schneidkanten 18 können bei einer abgeänderten Version gemäß Figur 8 auch durch hintereinanderliegende rechteckige Spannuten 19 erzeugt werden, welche ebenfalls parallel zur Zahnkopffläche an den Flankenvorsprüngen 15 vorgesehen sind. Auch hier gilt wieder, daß die Schneidkanten 18 von in Drehrichtung aufeinanderfolgender Flanken in Radialrichtung versetzt zueinander liegen.

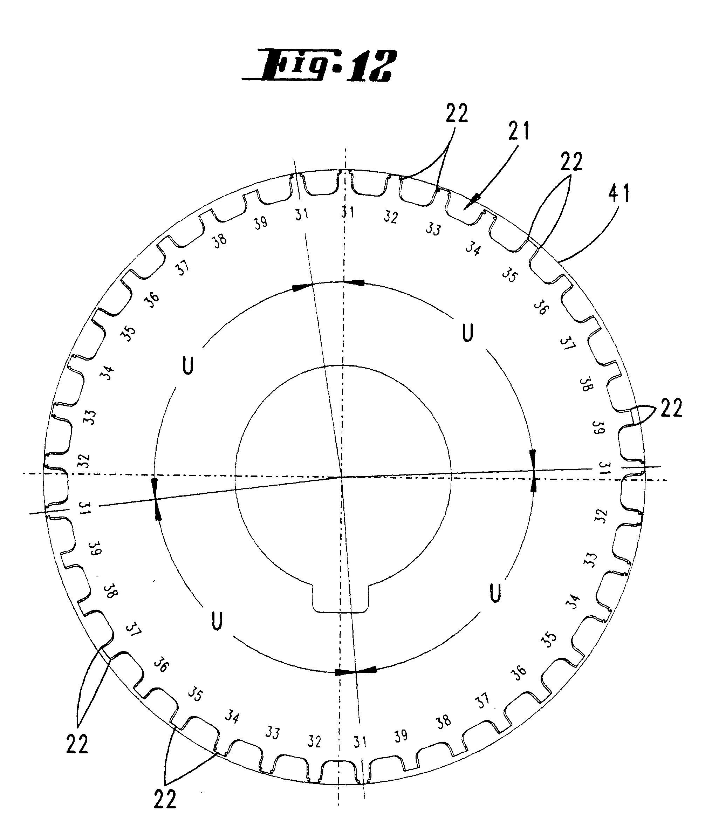

In Fig. 9 sind in stark vergrößerter Darstellung zwei hintereinanderliegende Zähne 11 des Werkrades 3 veranschaulicht. Es ist zu ersehen, daß sich die hintereinanderliegenden Schneidkanten einer Zahnflanke eines Zahnes des zahnradförmigen Werkzeuges auf voneinander verschiedenen, innerhalb einer Einhüllenden H liegenden Zykloidenästen a, b, c, d bewegen. Die Schneidkanten bzw. die Einhüllende H bewegen sich dabei innerhalb einer insbesondere evolventenförmigen Hüllkurve, welche die Hinterlegungs-Querschnittsform 20 an der rechtsliegenden Flanke des Zahnes 11 definiert. Das Werkstück 3 wird also gemäß Fig. 9 in einer festen Axialstellung bearbeitet.

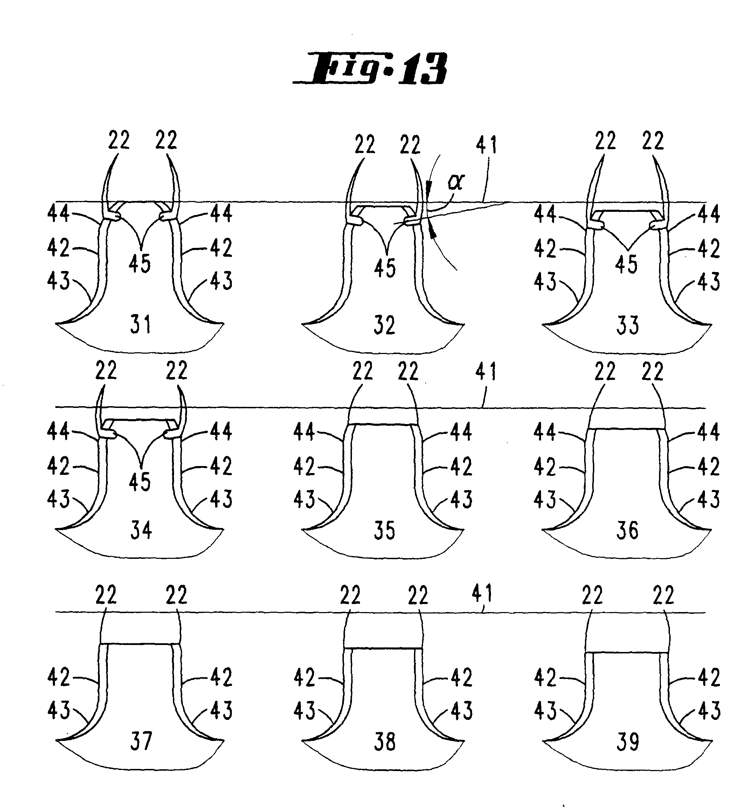

Fig. 10 veranschaulicht, daß die Achsabstände von Werkrad und Werkzeug beibehalten werden, jedoch ein Vorschub in Umfangsrichtung erfolgt, wobei die Einhüllende H unter Betrachtung von Fig. 9 und 10 weiter nach links, also tiefer in den Zahn 11 hineinverlagert wird. Hierdurch erhält man eine Hinterlegungs-Querschnittsform 20', welche gegenüber der in Fig. 9 veranschaulichen Hinterlegungs-Querschnittsform 20 abweicht.

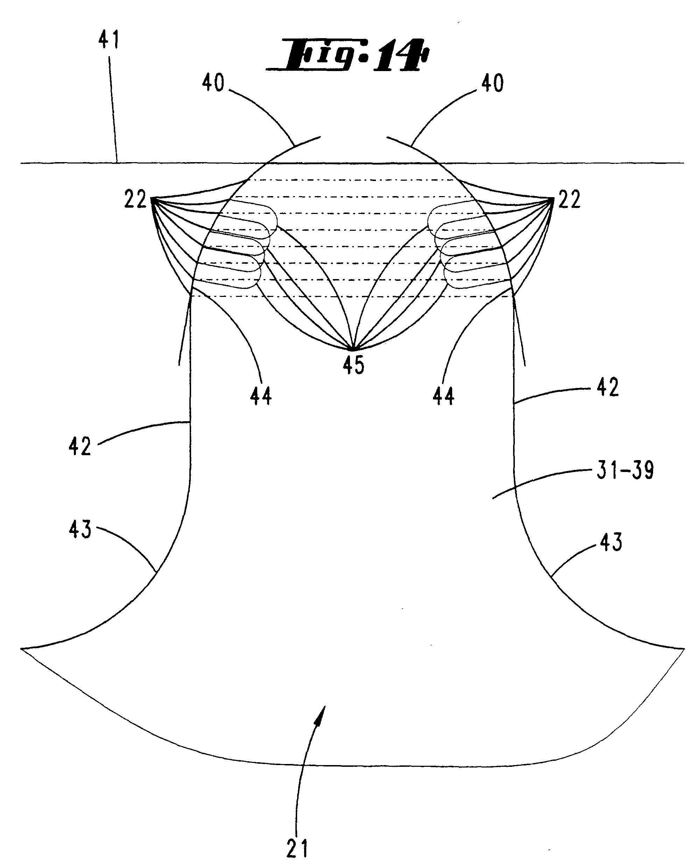

Eine weiter abgeänderte Hinterlegungs-Querschnittsform 20'' liegt bei den Zähnen 11 gemäß Fig. 11 vor. Erzielt ist der entsprechende Verlauf der Hinterlegungs-Querschnittsform 20'' dadurch, daß die Werkzeugachse gegenüber Fig. 9 in Pfeilrichtung z verlagert worden ist. Dies veranschaulicht, daß ein anderer Bereich der Einhüllenden H die entsprechende Kurvenform bestimmt. Die Eintauchstelle der Hüllkurve an dem Zahn 11 liegt dann mit größerem Abstand zum Zahngrund als bei Fig. 9.

Auf vorgenannte Weise lassen sich unterschiedlich beschaffene Hinterlegungs-Querschnittsformen erzielen, und zwar in Abhängigkeit davon, wie die Einhüllende den Zahn anschneidet.

Das in den Figuren 12 bis 14 veranschaulichte Schneidwerkzeug 21 hat die Form eines Zahnrades, wobei die Schneidkanten 22 der in Drehrichtung hintereinanderliegenden Zähne 31 bis 39 im Bereich eines Umfangabschnittes U einen variierenden Radialabstand aufweisen. Im Detail sieht dies so aus, daß der Radialabstand der Schneidkanten 22 der im Umfangsabschnitt U liegenden Zähne 31 bis 39 ab- bzw. zunimmt. Beim Ausführungsbeispiel sind drei hintereinanderliegende Umfangsabschnitte U mit in gleicher Sequenz angeordneten und gestalteten Zähnen 31 bis 39 vorgesehen. Da das Schneidwerkzeug 21 siebenunddreißig Zähne besitzt, entspricht der nicht von einem Umfangsabschnitt U erfaßte Zahn zwischen zwei Umfangsabschnitten U der Gestalt des Zahnes, so daß also im entsprechenden Bereich zwei gleichgestaltete Zähne 31 nebeneinander liegen, vergl. Fig. 12.

Gemäß Fig. 14, bei welcher die zu einem Umfangsabschnitt U gehörenden, hintereinanderliegenden Zähne 31 bis 39 in eine gedachte Überdeckungslage gebracht sind, befinden sich die Schneidkanten 22 der betreffenden Zahnflanken auf einer gemeinsamen Hüllkurve 40, deren Kontur ein Abschnitt der Bewegungsevolvente ist. Mit diesen Schneidkanten 22 der in einem Umfangsabschnitt aufeinanderfolgenden Zähne 31 bis 39 werden die Zahnflanken des Werkrades auf derselben Kurve überflogen.

Aus Fig. 13 ist ersichtlich, daß die Schneidkanten 22 der in einem Umfangsabschnitt aufeinanderfolgenden Zähne 31 bis 39 radial versetzt zueinander angeordnet sind und demgemäß radial versetzt zueinanderliegende Abschnitte der Zähne eines Werkrades bearbeiten. Mit der Linie 41 ist in Fig. 13 der Kopfkreis des zahnradartigen Schneidwerkzeuges 21 bezeichnet. Es ist zu sehen, daß der Zahn 31 eines Umfangsabschnittes U mit seiner Kopfstirnfläche auf Höhe des Kopfkreises liegt. Die sich im Uhrzeigersinn anschließenden Zähne 32 bis 39 besitzen dagegen einen kontinuierlich geringer werdenden Abstand zu dem Kopfkreis 41. Die Grundform jedes Zahnes 31 bis 39 setzt sich zusammen aus zwei parallel zueinander verlaufenden Zahnflankenabschnitten 42, welche über Hohlkehlenabschnitte 43 in den Fußkreis übergehen, und welche über konvex verlaufende Krümmungsabschnitte 44 zu dem Kopfkreis 41 führen. Fig. 13 veranschaulicht sodann deutlich, daß die Schneidkanten 22 aufeinanderfolgender Zähne 31 bis 39 eines Umfangabschnittes U radial versetzt zueinander angeordnet sind, derart, daß der Abstand der Schneidkanten 2 zum Kopfkreis 41 in Uhrzeigerrichtung kontinuierlich zunimmt und am Zahn 39 am größten ist. Die radial äußeren Schneidkanten 21 (also diejenigen der Zähne 31 bis 34) sind von quer zu den Zahnflanken gerichteten Nuten 45 gebildet. Jeder Krümmungsabschnitt 44 der Zähne 31 bis 34 besitzt eine Nut 45, welche in leichtem Anstieg in Richtung des Kopfkreises 41 verläuft. Beim Ausführungsbeispiel ist ein Anstiegswinkel Alpha von ca. 10° gewählt. Fig. 13 zeigt sodann, daß die Nuten 45 eines Zahnes symmetrisch zueinander angeordnet sind.

Die weiter radial inneren Schneidkanten 22 der Zähne 35 bis 39 sind dagegen die betreffenden Stirnkanten der Zähne. Diesen fehlen die Quernuten. Die Zahnkopffläche des Zahnes 39 besitzt einen so großen Abstand zum Kopfkreis 41, so daß der die Krümmungsabschnitte 44 ausbildende Zahnkopfbereich vollständig weggeschnitten ist. Beim Erzeugen der Hinterlegungsform kann eine Zustellung des Schneidwerkzeuges 21 in radialer Richtung oder auch in Umfangsrichtung erfolgen, wobei ein kontinuierliches Schneiden der Hinterlegungsform realisiert ist. Beide Vorschubrichtungen könnten jedoch auch in Kombination realisiert werden.

## Patentansprüche

1. Verfahren zum Erzeugen von Hinterlegungen (9) oder dergleichen an Zahnflanken (10) von innen- oder außenverzahnten Werkrädern (3) durch spanende Bearbeitung mittels eines Schneidkantenwerkzeuges (8, 21), welches um eine zur Werkradachse (4) parallele Werkzeugachse (7) dreht, mit einer Schneidkantenform, die der Hinterlegungsform entspricht, **gekennzeichnet durch** ein zahnradförmiges Werkzeug (8, 21), dessen Zähne (14, 21-39) die Schneidkanten (16, 18, 22) ausbilden.

2. Vorrichtung zum Erzeugen von Hinterlegungen (9) oder dergleichen an Zahnflanken (10) von innen- oder außenverzahnten Werkrädern (3) durch spanende Bearbeitung mittels eines Schneidkantenwerkzeuges (8, 21), welches um eine zur Werkradachse (4) parallele Werkzeugachse (7) dreht, mit einer Schneidkantenform, die der Hinterlegungsform entspricht, **gekennzeichnet durch** ein zahnradförmiges Werkzeug (8, 21), dessen Zähne (14, 31-39) die Schneidkanten (16, 18, 22) ausbilden.

3. Verfahren oder Vorrichtung nach Anspruch 1 oder 2,
**dadurch gekennzeichnet, daß** das Werkzeug (8) das Werkstück (3, 21) in einer festen Axialstellung bearbeitet.

4. Verfahren oder Vorrichtung nach einem oder mehreren der vorhergehenden Ansprüche, **dadurch gekennzeichnet, daß** das Werkzeug (8, 21) das Werkstück (3) in einer festen Radialstellung bearbeitet und der Vorschub in Umfangsrichtung erfolgt.

5. Verfahren oder Vorrichtung nach einem oder mehreren der vorhergehenden Ansprüche, **dadurch gekennzeichnet, daß** der Vorschub insbesondere auch in Radialrichtung erfolgt.

6. Verfahren oder Vorrichtung nach einem oder mehreren der vorhergehenden Ansprüche, **dadurch gekennzeichnet, daß** die Schneidkanten (16, 18, 22) an den Zahnflanken (13) des Werkzeuges (8, 21) sitzen.

7. Verfahren oder Vorrichtung nach einem oder mehreren der vorhergehenden Ansprüche, **dadurch gekennzeichnet, daß** jede Zahnflanke (13) eine Vielzahl von Schneidkanten (16 bzw. 18) ausbildet.

8. Verfahren oder Vorrichtung nach Anspruch 7, **dadurch gekennzeichnet, daß** jeweils nur eine radial äußerste Schneidkante zum Schneideingriff kommt.

9. Verfahren oder Vorrichtung nach einem oder mehreren der vorhergehenden Ansprüche, **dadurch gekennzeichnet, daß** die Schneidkanten (16, 18) in Drehrichtung aufeinanderfolgender Flanken (13) in Radialrichtung versetzt zueinander liegen.

10. Verfahren oder Vorrichtung nach einem oder mehreren der vorhergehenden Ansprüche, **dadurch gekennzeichnet, daß** das Werkzeug (8) erste Schneidkanten und zweite Schneidkanten ausbildet, wobei die ersten Schneidkanten nur in der einen Drehrichtung in Schneideingriff treten und die zweiten Schneidkanten in der anderen, entgegengesetzten Drehrichtung in Schneideingriff treten.

11. Verfahren oder Vorrichtung nach Anspruch 10, **dadurch gekennzeichnet, daß** Zähne (14), die entweder nur erste und Zähne (14), die entweder nur zweite Schneidkanten (16, 18) aufweisen, sich in Umfangsrichtung abwechseln.

12. Verfahren oder Vorrichtung nach Anspruch 10 oder 11, **dadurch gekennzeichnet, daß** der Winkelabstand zwischen jeweils einer ersten und jeweils einer zweiten Schneidkante anders ist als der in Umfangsrichtung daran angrenzende Winkelabstand zwischen einer zweiten und einer ersten Schneidkante.

13. Verfahren oder Vorrichtung nach einem oder mehreren der vorhergehenden Ansprüche, **dadurch gekennzeichnet, daß** sich die Schneidkanten (16, 18) einer Zahnflanke auf voneinander verschiedenen, innerhalb einer Einhüllenden (H) liegenden Zykloidenästen (a, b, c, d) bewegen.

14. Verfahren oder Vorrichtung nach einem oder mehreren der vorhergehenden Ansprüche, **dadurch gekennzeichnet, daß** durch Änderung von Phasenlage und Achsabstand von Werkzeugachse (7) zur Werkstückachse (4) während der Zahnflankenbearbeitung die Schneidkanten (16, 18) bzw. die Einhüllenden (H) sich innerhalb einer insbesondere evolventenförmigen Hüllkurve bewegen, welche die Hinterlegungs-Querschnittsform (20, 20', 20'') definiert.

15. Verfahren oder Vorrichtung nach einem oder mehreren der vorhergehenden Ansprüche, **gekennzeichnet durch** ein mit einem oder mehreren Schneidkanten ausgebildetes Ergänzungswerkzeug, dessen Schneidkantenzahl derart auf die Zahnzahl des Werkstückes abgestimmt ist, daß jede Schneidkante eine geschlossene Zykloide durchläuft.

16. Verfahren oder Vorrichtung nach einem oder mehreren der vorhergehenden Ansprüche, **dadurch gekennzeichnet, daß** das Zähneverhältnis zwischen Werkrad (3) und Werkzeug (8) etwa bei 3 : 1 liegt.

17. Verfahren oder Vorrichtung nach einem oder mehreren der vorhergehenden Ansprüche, **dadurch gekennzeichnet, daß** die Schneidkanten (22) der in einem Umfangsabschnitt (U) hintereinanderliegenden, in eine gedachte Überdeckungslage gebrachten Zähne (31 bis 39) auf einer gemeinsamen Hüllkurve (40) liegen, deren Kontur ein Abschnitt der Bewegungsevolvente ist.

18. Verfahren oder Vorrichtung nach einem oder mehreren der vorhergehenden Ansprüche, **dadurch gekennzeichnet, daß** die radial äußeren Schneidkanten (22) von Nuten (45) gebildet sind und die radial inneren Schneidkanten (22) die Stirnkanten der Zähne (35 bis 39) sind.

19. Verfahren oder Vorrichtung nach einem oder mehreren der vorhergehenden Ansprüche, **dadurch gekennzeichnet, daß** die Schneidkanten (22) aufeinanderfolgender Zähne (31 bis 39) an verschiedenen Radialpositionen des Werkrades angreifen, wobei sich die Materialabtragungen durch die Einzelschneidkanten (22) zur Hinterlegungsform ergänzen.

## Claims

1. Method for the production of cutbacks (9) or the like on tooth faces (10) of inwardly or outwardly meshed worked wheels (3) by machine cutting by means of a cutting edge tool (8, 21), which rotates about a tool axis (7) parallel to the worked wheel axis (4), having a cutting edge shape corresponding to the cutback shape, **characterised by** a gearwheel-shaped tool (8, 21) whose teeth (14, 21-39) form the cutting edges (16, 18, 22).

2. Device for the production of cutbacks (9) or the like on tooth faces (10) of inwardly or outwardly meshed worked wheels (3) by machine cutting by means of a cutting edge tool (8, 21), which rotates about a tool axis (7) parallel to the worked wheel axis (4), having a cutting edge shape corresponding to the cutback shape, **characterised by** a gearwheel-shaped tool (8, 21) whose teeth (14, 31-39) form the cutting edges (16, 18, 22).

3. Method or device according to Claim 1 or 2, **characterised in that** the tool (8) machines the workpiece (3, 21) in a fixed axial position.

4. Method or device according to one or more of the preceding claims, **characterised in that** the tool (8, 21) machines the workpiece (3) in a fixed radial position and forward feed ensues in the circumferential direction.

5. Method or device according to one or more of the preceding claims, **characterised in that** forward feed ensues in particular also in the radial direction.

6. Method or device according to one or more of the preceding claims, **characterised in that** the cutting edges (16, 18, 22) are seated on the tooth faces (13) of the tool (8, 21).

7. Method or device according to one or more of the preceding claims, **characterised in that** each tooth face (13) forms a large number of cutting edges (16 or 18).

8. Method or device according to Claim 7, **characterised in that** in each case only a radially extreme cutting edge comes into cutting engagement.

9. Method or device according to one or more of the preceding claims, **characterised in that** the cutting edges (16, 18) in the direction of rotation of successive faces (13) are offset relative to one another in the radial direction.

10. Method or device according to one or more of the preceding claims, **characterised in that** the tool (8) forms first cutting edges and second cutting edges, the first cutting edges entering into cutting engagement only in one direction of rotation and the second cutting edges entering into cutting engagement in the other, opposite direction of rotation.

11. Method or device according to Claim 10, **characterised in that** teeth (14) exhibiting only first and teeth exhibiting only second cutting edges (16, 18) alternate in the circumferential direction.

12. Method or device according to Claim 10 or 11, **characterised in that** the angular spacing in each case between a first and a second cutting edge differs from the angular spacing adjoining thereto in the circumferential direction between a second and a first cutting edge.

13. Method or device according to one or more of the preceding claims, **characterised in that** the cutting edges (16, 18) of a tooth face move on cycloid branches (a, b, c, d) differing from one another located inside an envelope (H).

14. Method or device according to one or more of the preceding claims, **characterised in that** by altering the phase position and axial spacing of the tool axis (7) relative to the workpiece axis (4) during machining of the tooth faces the cutting edges (16, 18) or the envelopes (H) move in particular inside an involute-shaped generating curve which defines the shape of the cutback cross-section (20, 20', 20").

15. Method or device according to one or more of the preceding claims, **characterised by** a supplementary tool formed by one or more cutting edges, the number of whose cutting edges is matched to the number of teeth in the workpiece in such a way that each cutting edge passes through a closed cycloid.

16. Method or device according to one or more of the preceding claims, **characterised in that** the tooth ratio between the worked wheel (3) and tool (8) is approximately 3 : 1.

17. Method or device according to one or more of the preceding claims, **characterised in that** the cutting edges (22) of the teeth (31 to 39) located one behind another in a circumferential section (U) and brought into a roofed covering position are located on a common generating curve (40) whose contour is a section of a movement involute.

18. Method or device according to one or more of the preceding claims, **characterised in that** the radially outer cutting edges (22) are formed by grooves (45) and the radially inner cutting edges (22) are the front faces of the teeth (35 to 39).

19. Method or device according to one or more of the preceding claims, **characterised in that** the cutting edges (22) of successive teeth (31 to 39) engage on different radial positions of the worked wheel, the removals of material by the individual cutting edges (22) adding to the cutback shape.

## Revendications

1. Procédé pour produire des contre-dépouilles (9) ou similaires, sur des flancs (10) de dents de roues d'engrenage (3) à usiner, à denture intérieure ou extérieure, par usinage par enlèvement de copeaux au moyen d'un outil (8, 21) à arêtes coupantes, qui tourne autour d'un axe d'outil (7) parallèle à l'axe (4) de la roue d'engrenage à usiner, avec une forme d'arêtes de coupe qui correspond à la forme de la contre-dépouille, **caractérisé par** un outil (8, 21) en forme de roue dentée d'engrenage et dont les dents (14, 21 à 39) forrnent les arêtes de coupe (16, 18, 22).

2. Dispositif pour produire des contre-dépouilles (9) ou similaire sur des flancs (10) de dents de roues d'engrenage (3) à usiner, à denture intérieure ou extérieure, par usinage par enlèvement de copeaux au moyen d'un outil (8, 21) à arêtes coupantes qui tourne autour d'un axe d'outil (7) parallèle à l'axe (4) de la roue d'engrenage à usiner, avec une forme d'arêtes de coupe qui correspond à la forme de la contre-dépouille, **caractérisé par** un outil (8, 21) en forme de roue dentée d'engrenage et dont les dents (14, 31 à 39) forment les arêtes de coupe (16, 18, 22).

3. Procédé ou dispositif selon la revendication 1 ou 2, **caractérisé en ce que** l'outil (8) usine la pièce à usiner (3, 21) dans une position axiale fixe.

4. Procédé ou dispositif selon l'une ou plusieurs des revendications précédentes, **caractérisé en ce que** l'outil (8, 21) usine la pièce à usiner (3) dans une position axiale fixe et réalise l'avance dans la direction circonférentielle.

5. Procédé ou dispositif selon l'une ou plusieurs des revendications précédentes, **caractérisé en ce que** l'avance est réalisée également en particulier dans la direction radiale.

6. Procédé ou dispositif selon l'une ou plusieurs des revendications précédentes, **caractérisé en ce que** les arêtes de coupe (16, 18, 22) sont disposées sur les flancs de dents (13) de l'outil (8, 21).

7. Procédé ou dispositif selon l'une ou plusieurs des revendications précédentes, **caractérisé en ce que** chaque flanc de dent (13) forme une pluralité d'arêtes de coupe (16 ou 18).

8. Procédé ou dispositif selon la revendication 7, **caractérisé en ce que** chaque fois, seule une arête de coupe radialement la plus extérieure vient en contact de coupe.

9. Procédé ou dispositif selon l'une ou plusieurs des revendications précédentes, **caractérisé en ce que** les arêtes de coupe (16, 18) sont disposées dans le sens de rotation des flancs (13) qui se suivent décalées les unes par rapport aux autres dans la direction radiale.

10. Procédé ou dispositif selon l'une ou plusieurs des revendications précédentes, **caractérisé en ce que** l'outil (8) forme des premières arêtes de coupe et des deuxièmes arêtes de coupe, les premières arêtes de coupe n'entrant en contact de coupe seulement dans un sens de rotation, tandis que les deuxièmes arêtes de coupe entrent en contact de coupe dans l'autre sens de rotation opposé.

11. Procédé ou dispositif selon la revendication 10, **caractérisé en ce que** les dents (14) qui comportent, d'une part, seulement la première arête de coupe (16, 18), et les dents qui comportent, d'autre part, seulement la deuxième arête de coupe (16, 18), sont alternées dans la direction périphérique.

12. Procédé ou dispositif selon la revendication 10 ou 11, **caractérisé en ce que** la distance angulaire entre chaque fois une première arête de coupe et chaque fois une deuxième arête de coupe est différente de la distance angulaire contiguë dans la direction périphérique entre une première et une deuxième arêtes de coupe.

13. Procédé ou dispositif selon l'une ou plusieurs des revendications précédentes, **caractérisé en ce que** les arêtes de coupe (16, 18) d'un flanc de dents se déplacent sur des branches de cycloïdes (a, b, c, d) différentes les unes des autres, se trouvant à l'intérieur d'une enveloppe (H).

14. Procédé ou dispositif selon l'une ou plusieurs des revendications précédentes, **caractérisé par** la modification de la position de phase et de l'entraxe de l'axe (7) de l'outil par rapport à l'axe (4) de la pièce à usiner, pendant l'usinage des flancs de dents, les arêtes de coupe (16, 18) ou l'enveloppe (H) se déplacent à l'intérieur d'une courbe enveloppe en particulier en forme de développante et qui définit la forme de section transversale (20, 20', 20") de la contre-dépouille.

15. Procédé ou dispositif selon l'une ou plusieurs des revendications précédentes, **caractérisé par** un outil de complément réalisé avec une ou plusieurs arêtes de coupe, le nombre des arêtes de coupe étant déterminé par rapport au nombre de dents de l'outil, de telle façon que chaque arête de coupe parcoure une cycloïde fermée.

16. Procédé ou dispositif selon l'une ou plusieurs des revendications précédentes, **caractérisé en ce que** le rapport du nombre de dents entre la roue à usiner (3) et l'outil (8) est d'environ 3:1.

17. Procédé ou dispositif selon l'une ou plusieurs des revendications précédentes, **caractérisé en ce que** les arêtes de coupe (22) des dents (31 à 39) disposées les unes derrière les autres dans une partie périphérique (U) et disposées dans une position de recouvrement imaginaire, sont disposées sur une courbe enveloppe commune (40) et dont le contour forme une partie de la développante de déplacement.

18. Procédé ou dispositif selon l'une ou plusieurs des revendications précédentes, **caractérisé en ce que** les arêtes de coupe radialement extérieures (22) sont munies de rainures (45) et les arêtes de coupe radialement intérieures (22) constituent les arêtes de coupe des dents (35 à 39).

19. Procédé ou dispositif selon l'une ou plusieurs des revendications précédentes, **caractérisé en ce que** les arêtes de coupe (22) des dents (31 à 39) qui se suivent viennent en contact dans des positions radiales différentes de la roue à usiner, les enlèvements de matériau par les arêtes de coupe individuelles (22) venant compléter la forme de la contre-dépouille.
